# EUROPÄISCHE PATENTSCHRIFT

(11) **EP 2 377 623 B1**
(45) Veröffentlichungstag und Bekanntmachung des Hinweises auf die Patenterteilung: **31.07.2013**
(21) Anmeldenummer: 10159732.6
(22) Anmeldetag: 13.04.2010
(51) Int. Cl.: B05C 5/02, B29C 47/16

(54) **Vorrichtung zum Abgeben von Fluid auf ein Substrat**
Device for applying liquid material to a substrate
Dispositif d'application d'une matière liquide sur un substrat

(43) Veröffentlichungstag der Anmeldung: 19.10.2011
(73) Patentinhaber: NORDSON CORPORATION, Westlake, OH 44145-1119 (US)
(72) Erfinder: Dittmann, Ralf, 21406, Melbeck (DE); Lübbecke, Kai, 21357, Wittorf (DE)
(74) Vertreter: Eisenführ, Speiser & Partner

(56) Entgegenhaltungen:
- EP-A1- 0 595 295
- EP-A1- 1 987 941
- EP-A2- 0 891 854
- DE-A1- 19 536 893
- JP-A- 10 005 663
- JP-A- 55 028 825
- US-A- 5 456 869
- US-A- 5 679 387

## Beschreibung

Die vorliegende Erfindung betrifft eine Vorrichtung zum Abgeben von Fluid auf ein Substrat, mit einem Grundkörper, einem mit einer Fluidquelle verbindbaren Fluidzuführkanal zum Zuführen des Fluids, und einer Düsenanordnung, welche einen mit dem Fluidzuführkanal kommunizierenden Verteilerkanal aufweist und welche einen mit dem Verteilerkanal kommunizierenden im Wesentlichen länglichen Schlitz mit mindestens einer Austrittsöffnung zum Abgeben des Fluids aufweist, wobei die mit Fluid füllbare wirksame Länge des Verteilerkanals mittels eines in dem Verteilerkanal bewegbaren Verschlusskörpers variierbar ist.

Derartige Vorrichtungen zum Abgeben von Fluid, die auch als Auftragskopf bezeichnet werden, kommen in verschiedenen industriellen Bereichen zum Einsatz, um Klebstoffe, Dichtstoffe oder andere Flüssigkeiten auf verschiedene Substrate wie Folien, Verpackungsmaterialien, Teile von Maschinen oder andere Werkstücke flächig aufzutragen. Auch kommen solche Vorrichtungen zum Einsatz, um Buchrücken zu beleimen. Die Vorrichtung wird an einem Rahmengestell oder dergleichen so montiert, dass das zu beschichtende Substrat vorbeigeführt wird, während das Fluid abgegeben wird. So wird das Fluid auf das Substrat aufgetragen. Dabei strömt das Fluid aus der schlitzförmigen länglichen Austrittsöffnung heraus und gelangt auf die Oberfläche des Substrates, beispielsweise eines Buchrückens. Die Austrittsöffnung des länglichen Schlitzes der Schlitzdüsenanordnung kann entweder durchgängig sein, um einen durchgehenden Streifen von Fluid aufzutragen, oder aber so unterteilt sein, dass mehrere benachbarte Streifen oder dünne Fäden oder Raupen abgegeben und aufgetragen werden.

Zur Variation der wirksamen Länge der im Wesentlichen schlitzförmigen Austrittsöffnung der Düsenanordnung kann die wirksame mit Fluid befüllbare Länge des Quer-Verteilerkanals variiert werden. Zu diesem Zweck ist an mindestens einer Seite des Verteilerkanals ein kolbenartiger Verschlusskörper bewegbar innerhalb des Verteilerkanals angeordnet. Der Verschlusskörper ist abgedichtet innerhalb des Verteilerkanals angeordnet, so dass er den Verteilerkanal seitlich in unterschiedlichen Positionen so begrenzt, dass die wirksame Länge des Verteilerkanals und damit die wirksame Länge des Schlitzes und damit der schlitzförmigen Austrittsöffnung variierbar ist. Der Verschlusskörper kann beispielsweise mit einer Stange verbunden sein, die manuell oder motorisch oder mithilfe einer Gewindespindeleinrichtung hin- und herverfahrbar ist. Auf diese Weise lassen sich unterschiedlich breite Fluidstreifen abgeben und auf ein Substrat auftragen. So kann beispielsweise bei der Buchrückenbeleimung die Auftragsbreite an die Größe der Bücher angepasst werden. Eine solche Vorrichtung ist beispielsweise aus der WO 00/67914 bekannt. Bei einigen Ausführungen der Schlitzdüsenanordnung ist der Verschlusskörper mit einer in den Schlitz in Richtung auf die Austrittsöffnung hineinragenden Erweiterung, die manchmal als Fahne bezeichnet wird, verbunden, so dass auch der längliche Schlitz seitlich bis in den Bereich der Austrittsöffnung begrenzt wird. Dadurch sollen scharfe seitliche Begrenzungen des abgegebenen Fluidstreifens und damit auch des auf das Substrat aufgetragenen Streifens erreicht werden. Einen weiteren Stand der Technik zeigt die US 5 679 387 A.

Bei der Variation der Länge des Verteilerkanales durch Verschieben eines Verschlusskörpers ändert sich das Volumen des Verteilerkanals und in solchen Fällen, in denen der Verschlusskörper mit einer Art Fahne, die in den Schlitz bis in den Bereich der Austrittsöffnung hineinragt verbunden ist, das Volumen des Verteilerkanals und des Schlitzes. Diese Änderung des Volumens kann bei der Variation der Länge zu Nachteilen führen. Während einer Verkleinerung der Auftragsbreite durch Verkürzung des Verteilerkanals kann Klebstoff aus der schlitzförmigen Austrittsöffnung herausgedrückt werden, so dass der Klebstoff in unerwünschter Weise auf das Substrat oder die Umgebung gelangt. Beim Vergrößern des Volumens des Verteilerkanals und ggf. des Schlitzes kann Luft aus der Umgebung in den Schlitz und den Verteilerkanal hineinströmen, während das Volumen des Verteilerkanals sich vergrößert. Das Hineinsaugen von Luft kann dann bei Wiederaufnahme des Auftragsbetriebes dazu führen, dass unmittelbar nach dem Öffnen eines Auftragsventiles noch kein Klebstoff aus der Austrittsöffnung herausströmt, so dass das Substrat nicht oder nur unvollständig mit Klebstoff versehen wird. Dies kann dazu führen, dass beispielsweise ein Buchrücken unvollständig beleimt und deshalb anschließend nicht weiter verarbeitet werden kann.

Aufgabe der vorliegenden Erfindung ist es daher, eine Vorrichtung zum Abgeben von Fluid auf ein Substrat bereitzustellen, bei der die Veränderung der wirksamen Länge des Schlitzes nicht zu den zuvor beschriebenen Nachteilen führt. Insbesondere soll eine Vorrichtung zum Abgeben von Fluid bereitgestellt werden, die auch nach Änderung der Schlitzlänge und damit Auftragsbreite sofort optimale Beschichtungsergebnisse erzielt.

Die Erfindung löst die Aufgabe bei einer Vorrichtung der eingangs genannten Art dadurch, dass ein Ausgleichskanal mit den im kennzeichnenden Teil genannten Merkmalen mit dem Verteilerkanal in Fluidverbindung steht, dessen Volumen zur Aufnahme von Fluid veränderbar ist.

Durch den erfindungsgemäßen Ausgleichskanal, welcher in Fluidverbindung mit dem Verteilerkanal steht und dessen inneres Volumen, welches für eine Aufnahme von Fluid bereitsteht, veränderbar ist, lässt sich in vorteilhafter Weise ein Volumenausgleich oder eine Volumenkompensation verwirklichen, insbesondere dergestalt dass bei einer Verkürzung der Länge des Verteilerkanals durch Einschieben des Verschlusskörpers gleichzeitig das Volumen des erfindungsgemäßen Ausgleichskanals vergrößert wird, und bei einer Vergrößerung des Verteilerkanals durch entsprechende Verschiebung des Verschlusskörpers das Volumen des Ausgleichskanals verkleinert wird. Dadurch lässt sich erreichen, dass bei einer Verschiebung des Verschlusskörpers zur Variation der Länge des Verteilerkanals und damit der Länge des Schlitzes weder Fluid während der Längenverstellung aus der Austrittsöffnung herausgedrückt wird, noch bei einer Vergrößerung der Länge Gas in den Schlitz und den Verteilerkanal hinein gesaugt wird. Mittels des Ausgleichkanals lassen sich innere Volumenänderungen des Verteilerkanals und ggf. auch des Schlitzes kompensieren. Bei einer Variation der Schlitzlänge und damit der Auftragsbereite kommt es somit weder zu unerwünschten Verschmutzungen der äußeren Oberflächen der Schlitzdüsenanordnung oder der Umgebung der Vorrichtung, noch zu schlechten Beschichtungsergebnissen beim erneuten Einschalten des Auftragsvorganges. Erfindungsgemäß lässt sich somit erreichen, dass kein Produktausschuss aufgrund der Längenänderung des Schlitzes erfolgt. Zu diesem Zweck ist das Volumen des Ausgleichskanals veränderbar.

Erfindungsgemäß ist das Volumen des Ausgleichskanals in Abhängigkeit von der Größe des jeweils wirksamen mit Fluid befüllten Volumens des Verteilerkanals veränderbar derart, dass bei einer Verstellung der wirksamen Länge des Verteilerkanals das gesamte mit Fluid gefüllte Volumen des Verteilerkanals, des Ausgleichkanals und des Schlitzes im Wesentlichen konstant bleibt. Auf diese Weise wird das Volumen wesentlicher inneren Strömungskanäle der Düsenanordnung im Wesentlichen konstant gehalten, so dass es bei einer Vergrößerung der Länge nicht zu einem Eintreten von Luft in die inneren Strömungskanäle kommt und bei einer Verkleinerung der Länge des Schlitzes nicht zu einem unerwünschten Herausdrücken oder Herausströmen von Klebstoff aus der Austrittsöffnung kommt. Anders ausgedrückt wird durch die Erfindung erreicht, dass in dem Maße, in dem das Volumen des Verteilerkanals und des Schlitzes bis zur Austrittsöffnung sich ändert, gleichermaßen das Volumen des Ausgleichskanals geändert wird. Auf diese Weise kommt es sehr genau zu der erfindungsgemäßen Volumenkompensation und einer Vermeidung der im Stand der Technik vorhandenen Nachteile.

Gemäß einer bevorzugten Ausführungsform wird ferner vorgeschlagen, dass das Volumen des Ausgleichskanals dadurch veränderbar ist, das ein Verdrängungskörper bewegbar innerhalb des Ausgleichskanals angeordnet ist. Durch einen innerhalb des Ausgleichskanals bewegbaren Verdrängungskörper lässt sich das Volumen des Ausgleichkanals auf konstruktiv relativ einfache und gleichzeitig präzise Weise variieren, so dass die beschriebene Volumenkompensation sehr genau erfolgen kann.

Besonders bevorzugt ist es, dass der Verdrängungskörper ein Kolben ist, der abgedichtet und bewegbar innerhalb des Ausgleichskanals angeordnet ist. Ein solcher Kolben kann entweder metallisch dichtend innerhalb des Ausgleichskanals angeordnet sein oder aber eventuell auch durch mindestens ein zusätzliches Dichtungselement, etwa einem Kolbenring oder dergleichen abgedichtet werden. Auch lässt ich ein derartiger Kolben vergleichsweise einfach und genau herstellen. Desweiteren kann ein solcher Kolben, insbesondere wenn er aus Metall besteht und auch der Ausgleichskanal innerhalb eines metallischem Bauteils ausgebildet ist besonders temperaturbeständig sein.

Besonders bevorzugt ist es, dass der Ausgleichskanal eine im Wesentlichen zylindrische, teilzylindrische oder im Wesentlichen mehreckige Form hat und durch einen im Wesentlichen zylindrischen, teilzylindrischen oder mehreckigen Kolben abgedichtet wird. Auf diese Weise ergeben sich herstellungstechnische und funktionale Vorteile. Desweiteren kann die gewünschte Volumenkompensation präzise erreicht und genau vorausberechnet werden.

Gemäß einer alternativen bevorzugten Ausführungsform ist vorgesehen, dass der in dem Verteilerkanal bewegbare Verschlusskörper ein Kolben ist, der den Verteilerkanal seitlich abdichtet und dadurch die wirksame Länge des Verteilerkanals begrenzt. Die oben im Zusammenhang mit dem Verdrängungskörper des Ausgleichskanals beschriebenen Vorteile ergeben sich auch dann, wenn der innerhalb des Verteilerkanals bewegbare Verschlusskörper zur Variation der wirksamen Länge ein Kolben ist.

Gemäß einer bevorzugten Weiterbildung wird vorgeschlagen, dass der Verteilerkanal und der Ausgleichskanal im Wesentlichen parallel zueinander angeordnet sind Durch die parallele Anordnung von einem im Wesentlichen länglichen, gerade verlaufenden Verteilerkanal und einem im Wesentlichen länglichen, gerade verlaufenden Ausgangskanal ergeben sich weitere herstellungstechnische Vorteile. Ferner lassen sich eine kompakte Bauform und ein günstiger Fluidfluss realisieren.

Zweckmäßigerweise kommunizieren Verteilerkanal und Ausgleichskanal mittels eines Verbindungskanals miteinander. Dabei ist es besonders bevorzugt, dass der Ausgleichskanal so in Bezug zu dem Zuführkanal und dem Verteilerkanal angeordnet ist, dass das Fluid im Betrieb von dem Zuführkanal in den Ausgleichskanal strömt, den Ausgleichskanal durchströmt, dann den Verbindungskanal zwischen Ausgleichskanal und Verteilerkanal (38) durchströmt und dann den Verteilerkanal und den Schlitz durchströmt, da auf diese Weise Toträume über den gesamten Einstellbereich der Auftragsbreite für das Fluid weitgehend vermieden werden können, in denen z. B. der Kleber nicht ausgetauscht wird, da das Fluid jegliche Hohlräume auf dem Weg zur Austrittsöffnung durchströmt. Unerwünschte Vercrackungen oder Aushärtungen des Fluides und Lufteinschlüsse können somit weitgehend vermieden werden.

Bei einer besonders bevorzugten weiteren Ausführungsform ist vorgesehen, dass die Vorrichtung zwei relativ zueinander in Längsrichtung des Schlitzes bewegbare Düsenteile aufweist, dass der Schlitz seitlich durch die zwei Düsenteile begrenzt wird und die wirksame Länge des Schlitzes durch Verschiebung der beiden Düsenteile relativ zueinander verändert wird. Dadurch, dass zwei relativ zueinander bewegbare Düsenteile vorgesehen sind und sich durch entsprechende Relativverschiebung der Düsenteile zueinander die Länge des Schlitzes verändert, lässt sich eine kompakte Bauform erzielen. Auch die Anzahl der beweglichen Teile ist hierbei reduziert.

Gemäß einer Weiterbildung wird vorgeschlagen, dass der Verteilerkanal und/oder Ausgleichskanal und/oder Verbindungskanal im Wesentlichen als Vertiefung in einem der beiden Düsenteile oder durch Vertiefungen in beiden Düsenteilen ausgebildet ist. Es lassen sich strömungsgünstige Verläufe und herstellungstechnische Vorteile realisieren. So können beispielsweise die Kanäle als Ausfräsungen in den Düsenteilen hergestellt werden.

Bei einer weiteren bevorzugten Ausführungsform ist vorgesehen, dass der Kolben zur Begrenzung des Verteilerkanals und/oder der Kolben zur Veränderung des Volumens des Ausgleichskanals mechanisch mit dem bewegbaren Düsenteil gekoppelt ist, insbesondere mittels einer Kopplungsstange. Durch die Kopplung des Kolbens in dem Verteilerkanal und/oder des Kolbens in dem Ausgleichkanal mit dem bewegbaren Düsenteil lässt sich eine einfache automatische Volumenkompensation erreichen. Bei Bewegung des Düsenteils zur Veränderung der Länge des Schlitzes wird automatisch das Volumen des Ausgleichskanals angepasst. Hierzu wird insbesondere eine einfache Kopplungs- oder Kolben-Stange eingesetzt. Wird beispielsweise das bewegliche Düsenteil zur Verkleinerung der Schlitzlänge bewegt, kann gleichzeitig das Volumen des Ausgleichskanals vergrößert werden durch entsprechende Verstellung des Kolbens. Die Bewegung der beiden Düsenteile relativ zueinander kann mittels einer mechanischen oder motorischen Einrichtung, insbesondere einer Gewindespindel oder auch mithilfe eines Motors, insbesondere eines Elektromotors vorgenommen werden.

Gemäß weiterer alternativer Ausführungsformen wird vorgeschlagen, der Kolben zur Veränderung des Volumens des Ausgleichskanals mindestens eine Durchgangsbohrung aufweist, durch welche das Fluid hindurch strömen kann. Ist in dem Kolben eine Durchgangsbohrung vorhanden, lässt sich das Fluid auf einfache Weise von dem Zuführkanal durch eine oder mehrere Durchgangsbohrungen in dem Kolben in den Ausgleichskanal einleiten. Der Kolben ist insbesondere als Rohr ausgebildet, welches einen solchen Außendurchmesser aufweist, dass das Rohr außen im Wesentlichen metallisch abgedichtet innerhalb des entsprechend geformten Ausgleichskanals bewegbar angeordnet ist, so dass das Fluid gleichzeitig durch das Innere des Rohres von dem Zuführkanal in den Ausgleichskanal einströmen kann, um von dort weiter, insbesondere durch einen Verbindungskanal in den Verteilerkanal eingeleitet zu werden. Ein solcher rohrartiger Kolben, der den Verdrängungskörper in dem Ausgleichskanal bildet, lässt sich einfach Herstellen, und das Fluid lässt sich in vorteilhafter Weise zuführen.

Bei einer alternativen Ausführungsform kann desweiteren vorgesehen sein, dass der Kolben mehrere Durchtrittskanäle aufweist, durch welche Fluid von dem Ausgleichskanal in den Verteilerkanal strömen kann. Der Kolben ist dabei außen abgedichtet innerhalb des Ausgleichskanals bewegbar. Die eine Seite des Ausgleichskanals steht in Fluidverbindung mit dem Zuführkanal. Bei Verschiebung des Kolbens wird gleichzeitig das Volumen des Ausgleichskanals vergrößert und das Volumen des Verteilerkanals und dessen Länge verkleinert. Ausgleichskanal und Verteilerkanal sind hierbei insbesondere fluchtend und koaxial und benachbart zueinander angeordnet. Der Kolben trennt Ausgleichskanal und Verteilerkanal voneinander, und durch Verstellung des Kolbens variiert das Volumen des Ausgleichskanals und des Verteilerkanals gleichzeitig.

Gemäß einer alternativen Ausführungsform wird vorgeschlagen, dass der Kolben einen ersten als Rohr ausgebildeten Abschnitt aufweist, durch welchen Fluid aus dem Fluidzuführkanal hindurch strömen kann, und einen abgedichtet in dem Ausgleichskanal angeordneten Dichtabschnitt aufweist, der das Rohr an einem Ende begrenzt, dass das Rohr mehrere Durchtrittsbohrungen aufweist, durch welche Fluid aus dem Rohr in den Ausgleichskanal und von dort durch den Verbindungskanal in den Verteilerkanal einströmen kann.

Die Erfindung ist nachstehend anhand von mehreren bevorzugten Ausführungsbeispielen unter Bezugnahme auf die beiliegenden Zeichnungen beschrieben. Es zeigen:
- Figur 1: eine Vorrichtung zum Abgeben von Fluid auf ein Substrat in einem ersten Ausführungsbeispiel in perspektivischer Darstellung;
- Figur 2: die Vorrichtung aus Figur 1 in einer Draufsicht,
- Figur 3: die Vorrichtung aus Figur 1 in einer Ansicht von links,
- Figur 4: die Vorrichtung aus Figur 1 in einer Ansicht von rechts,
- Figur 5: die Vorrichtung aus Figur 1 in einer perspektivischen Ansicht von hinten;
- Figur 6a: die Vorrichtung aus Figur 1 in Teilschnittdarstellung in einem Einstellzustand mit großer Schlitzlänge,
- Figur 6b: die Vorrichtung aus Figur 1 in Teilschnittdarstellung in einem Einstellzustand mit mittlerer Schlitzlänge,
- Figur 6c: die Vorrichtung aus Figur 1 in Teilschnittdarstellung in einem Einstellzustand mit kleinen Schlitzlänge,
- Figur 7: eine Vorrichtung zum Abgeben von Fluid in einem weiteren Ausführungsbeispiel in einer schematischen Darstellung,
- Figur 8: die Vorrichtung aus Figur 7 in einer Teilschnittdarstellung,
- Figur 9: eine Vorrichtung zum Abgeben von Fluid in einem weiteren Ausführungsbeispiel in einer schematischen Darstellung,
- Figur 10: die Vorrichtung aus Figur 9 in einer Teilschnittdarstellung,
- Figur 11: eine Vorrichtung zum Abgeben von Fluid in einem weiteren Ausführungsbeispiel in einer schematischen Darstellung,
- Figur 12: die Vorrichtung aus Figur 11 in einer Teilschnittdarstellung,
- Figur 13: eine Vorrichtung zum Abgeben von Fluid in einem weiteren Ausführungsbeispiel in einer schematischen Darstellung,
- Figur 14: in einer Seitenansicht in Teilschnittdarstellung, und
- Figur 15: eine Vorrichtung zum Abgeben von Fluid in einem weiteren Ausführungsbeispiel in einer schematischen Darstellung,

Die in den Figuren dargestellten Ausführungsbeispiele betreffen Vorrichtungen 1 zum Abgeben von Fluid auf ein Substrat, insbesondere auf ein relativ zu der Vorrichtung bewegbares Substrat. Es können verschiedene Fluide wie Klebstoffe, Heißschmelzklebstoff abgegeben und auf verschiedene Substrate wie Bücher, Buchrücken, Folien oder dergleichen aufgetragen werden. Insbesondere dienen die Vorrichtungen zum flächigen Beschichten von verschiedenen Substraten mit Klebstoff. Selbstverständlich können andere Fluide auf andere Substrate flächig oder in Streifenform oder in dünnen Fäden aufgetragen werden.

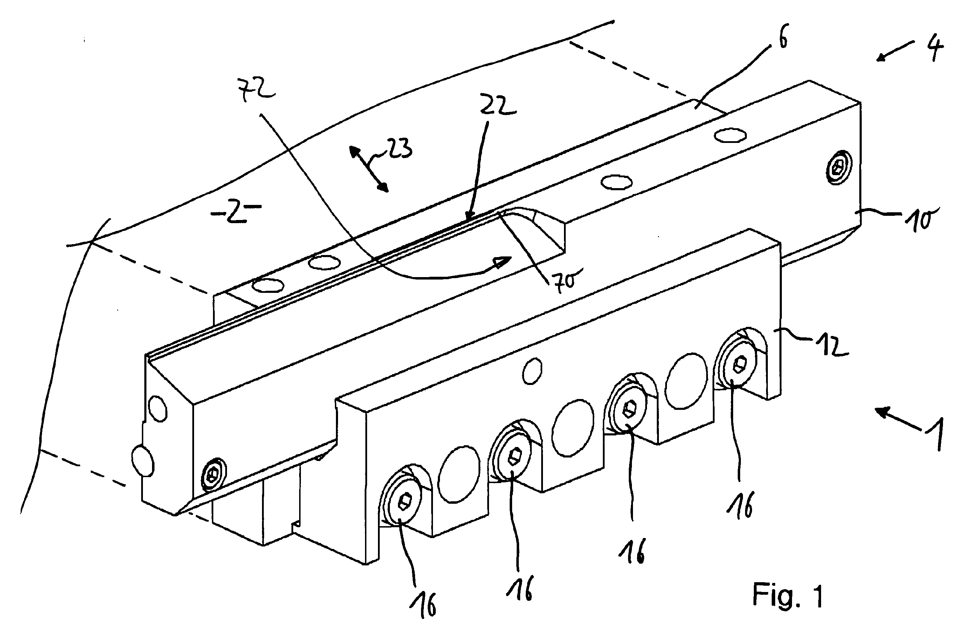

Wie insbesondere in Figur 1 gezeigt ist, weist die Vorrichtung 1 einen lediglich schematisch angedeuteten Grundkörper 2 auf. Mittels des Grundkörpers 2 lässt sich die Vorrichtung 1 an einem nicht gezeigten Rahmengestell in einer gewünschten Einbaulage positionieren, so dass ein Substrat wie beispielsweise ein Buch an der Vorrichtung 1 so vorbeigeführt werden kann, dass abgegebenes Fluid auf das Substrat aufgetragen wird. In oder an dem Grundkörper 2 können in an sich bekannter Weise eine Ventilanordnung zum Freigeben bzw. Unterbrechen von zugeführtem Fluid, Steuerungseinrichtungen, Heizeinrichtungen, im Falle von Pneumatikventilen Pneumatikanschlüsse und -kanäle oder im Falle einer elektrischen Ventil-Antriebseinrichtung elektrische Anschlüsse und Halteeinrichtungen vorgesehen sein. Auch kann ein Fluidzuführkanal in dem Grundkörper 2 ausgebildet sein zum Zuführen von Fluid.

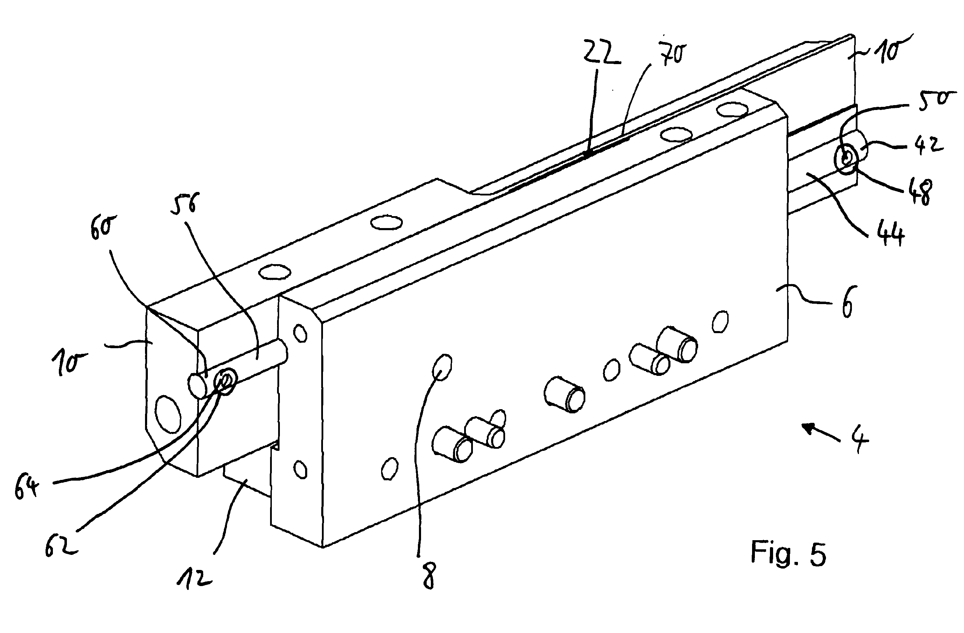

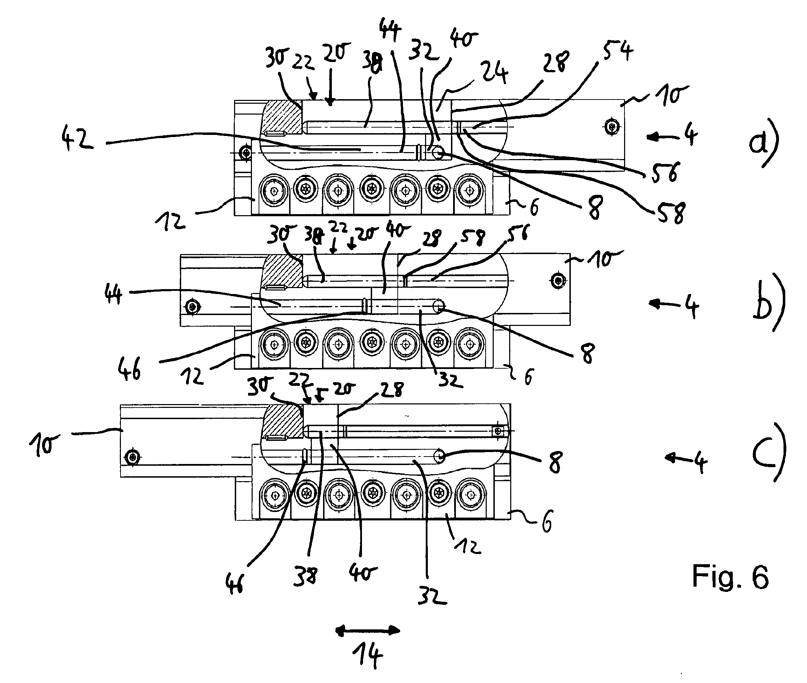

Die Vorrichtung 1 weist ferner eine an dem Grundkörper 2 lösbar befestigte Düsenanordnung 4 auf. Die Düsenanordnung 4 weist ein erstes fest mit dem Grundkörper 2 verschraubtes Düsenteil 6 auf. Die Funktion des Grundkörpers 2 und des Düsenteils 6 können auch in einem Teil zusammengefasst werden. Wie die Rückansicht gemäß Figur 5 zeigt, weist das Düsenteil 6 einen Fluidzuführkanal 8 auf, welcher mit einer Fluidquelle (nicht gezeigt) kommunizierenden Fluid-Zuführkanal kommuniziert, welcher in dem Grundkörper 2 ausgebildet ist. Durch den Fluidzuführkanal 8 kann das Fluid in die Düsenanordnung 4 eingeleitet werden. Er ist als Durchgangsbohrung ausgebildet und in der Teilschnittdarstellung gemäß Figur 6 ebenfalls erkennbar.

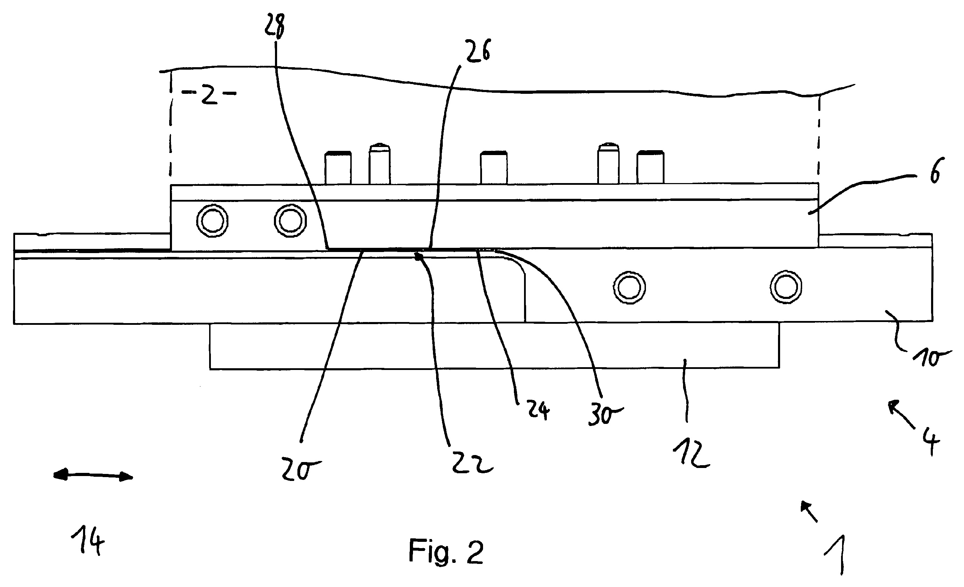

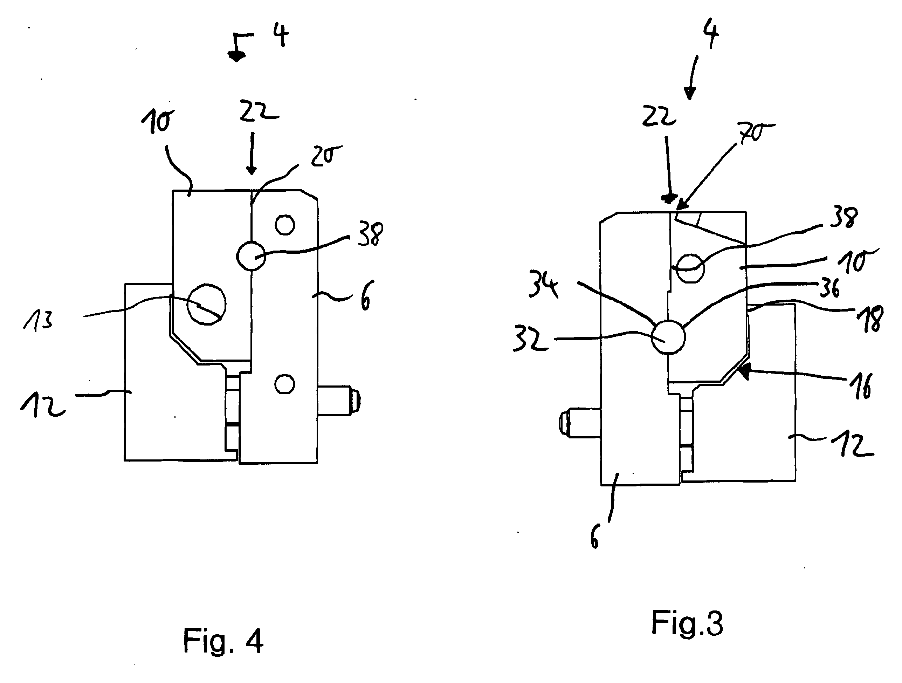

Die Düsenanordnung 4 weist ferner ein relativ zu dem ersten Düsenteil 6 bewegbares weiteres Düsenteil 10 auf, welches mittels eines Klemmstücks 12 so an dem feststehenden Düsenteil 6 befestigt ist, dass es in Richtung eines Pfeiles 14 (Figur 2) hin- und herbewegbar ist und desweiteren nicht verloren geht, unabhängig von der jeweiligen Einbaulage der Vorrichtung 1. Wie Figur 1 zeigt, ist das Klemmstück 12 mit mehreren Schrauben 16 an dem Düsenteil 6 befestigt. Das Klemmstück 12 weist im Querschnitt eine im Wesentlichen rechteckige Form auf und ist im Bereich einer Ecke mit einer Aussparung 16 (Figur 3) versehen, welche durch mehrere ebene Flächen begrenzt ist. An einer an einem Vorsprung 18 ausgebildeten Fläche steht das Klemmstück 12 mit dem bewegbaren Düsenteil 10 in Kontakt.

Die Düsenanordnung 4 weist einen länglichen, mit Fluid speisbaren Schlitz 20 (Figur 2) mit einer Austrittsöffnung 22 zum Abgeben von Fluid auf. Die Länge des Schlitzes 20, das heißt die Erstreckung in Richtung des Doppelpfeils 14 ist veränderbar. In Figur 1 ist die Bewegungsrichtung eines Substrats relativ zu der Vorrichtung 1 und insbesondere der Austrittsöffnung 22 des Schlitzes 20 dargestellt. Austrittsöffnung 22 und Substratbewegungsrichtung (Doppelpfeil 23) stehen im Ausführungsbeispiel im Wesentlichen senkrecht zueinander. Die Breite des Schlitzes ist durch den Abstand des Düsenteils 6 und des beweglichen Düsenteils 10 im Bereich des Schlitzes 20 definiert. Im Ausführungsbeispiel ist der Schlitz 20 dadurch zwischen den Düsenteilen 6, 10 gebildet, dass entsprechend geformte Vertiefungen 24, 26, insbesondere Ausfräsungen in den sich gegenüberliegenden Oberflächen der Düsenteile 6, 10 ausgebildet sind. Die Vertiefung 24 in dem beweglichen Düsenteil 10 und der Schlitz 20 ist jeweils in den Darstellungen in Figur 6a, b, c erkennbar. Auch an dem feststehenden Düsenteil 6 ist eine Vertiefung 26 ausgebildet, wie beispielsweise in Figur 2 erkennbar ist. Seitlich wird der Schlitz 20 durch die seitlichen Begrenzungen der Vertiefungen 24, 26 begrenzt, in Figur 2 dargestellt durch die Bezugszeichen 28, 30, die auch in den Figuren 6 gezeigt sind. Durch den Abstand der seitlichen Begrenzungen 28, 30 in Richtung der Längserstreckung des Schlitzes 20 und damit auch in Richtung des Doppelpfeils 14 ist die Länge des Schlitzes L und die Länge der Austrittsöffnung 22 festgelegt.

Durch relative Bewegung und Verschiebung des beweglichen Düsenteils 10 relativ zu dem feststehenden Düsenteil 6 lässt sich, wie insbesondere die Figuren 6a bis c gut veranschaulichen, die Länge variieren. Zur relativen Bewegung des Düsenteils 10 ist im Ausführungsbeispiel eine nicht näher gezeigte Spindeleinrichtung vorgesehen. Die Spindeleinrichtung weist eine an einem Abschnitt des Grundkörpers 2 in einer Bohrung drehbar gelagerte Gewindespindel auf sowie ein an dem Düsenteil 10 angeordnetes Innengewinde 13, mit welchem das Außengewinde der Gewindespindel in Eingriff steht derart, dass durch Drehung der Gewindespindel das Düsenteil 10 axial in Richtung des Doppelpfeils 14 hin- und herbewegbar ist. Durch Verdrehung der Gewindespindel lässt sich also das Düsenteil 10 in verschiedene exemplarisch in den Figuren 6a bis c gezeigte Stellungen verfahren, um die Länge des Schlitzes 20 stufenlos variieren zu können.

Wie gut in Figur 6 erkennbar kommuniziert der Zuführkanal 8 mit einem Ausgleichskanal 32, so dass Fluid aus dem Zuführkanal 8 in den Ausgleichskanal 32 einleitbar ist. Der Ausgleichskanal 32 ist innerhalb der Düsenanordnung 4 ausgebildet. Der Ausgleichskanal 32 ist im Ausführungsbeispiel im Wesentlichen zylinderförmig gestaltet und dadurch gebildet, dass in dem feststehenden Düsenteil 6 eine im Querschnitt halbkreisförmige Vertiefung 34 eingefräst ist und in dem beweglichen Düsenteil 10 eine im Querschnitt ebenfalls halbkreisförmige Vertiefung 36 ausgebildet ist, so dass ein insgesamt im Wesentlichen im Querschnitt halbkreisförmiger oder alternativ teilzylindrischer Ausgleichskanal 32 geformt ist.

Wie Figur 4 und 6 gut zeigen, weist die Düsenanordnung 4 ferner einen Quer-Verteilerkanal 38 auf, der im Wesentlichen als teilkreisförmiger Kanal ausgebildet ist.
ausgebildet ist und sich in Richtung des Doppelpfeils 14 und damit in Richtung der Längsausstreckung des Schlitzes 20 erstreckt. Der Verteilerkanal 38 kommuniziert mit dem Schlitz 22, so dass Fluid gleichmäßig aus der Austrittsöffnung 22 des Schlitzes 20 austreten kann. Der Verteilerkanal 38 steht seinerseits in Fluidverbindung mit dem Ausgleichskanal 32 und somit dem Zuführkanal 8 und somit der Fluidquelle. Die Fluidverbindung zwischen Verteilerkanal 38 und Ausgleichskanal 32 ist im Ausführungsbeispiel durch einen Verbindungskanal 40 verwirklicht (siehe Figur 6), welcher einerseits mit einem Abschnitt des Ausgleichskanals 32 und andererseits mit einem Abschnitt des Verteilerkanals 38 kommuniziert. Der Verbindungskanal 40 ist in Form einer Vertiefung in dem beweglichen Düsenteil 10 ausgebildet. Er könnte jedoch gleichermaßen als Vertiefung in dem feststehenden Teil oder in dem feststehenden Teil 6 und dem beweglichen Düsenteil 10 ausgebildet sein.

Das Volumen zur Aufnahme von Fluid in dem Ausgleichskanal 32 ist veränderbar. Zu diesem Zweck ist ein Verdrängungskörper 42 in Form eines Kolbens 44 bewegbar innerhalb des Ausgleichskanals 32 angeordnet. Im Bereich des Endabschnitts des Kolbens 44 kann eine Dichtung, beispielsweise als O-Ringdichtung 46 (Figur 6) ausgebildet, vorgesehen sein. Durch Bewegung des Verdrängungskörpers 42 in Form des Kolbens 44 wird das wirksame mit Fluid aus dem Zuführkanal 8 befüllbare Volumen des Ausgleichskanals 32 verändert. Bewegt sich der Kolben 44 in Figur 6 nach links, vergrößert sich das mit Fluid befüllbare Volumen des Ausgleichskanals 32. Bewegt sich der Kolben 44 nach rechts, verkleinert sich das Volumen des Ausgleichskanals 32.

Der als Kolben 44 ausgebildete Verdrängungskörper 42 ist im Ausführungsbeispiel mit seinem außerhalb des Ausgleichskanals 42 liegenden Abschnitt, insbesondere mit seinem Endabschnitt, der in Figur 5 gezeigt ist, mittels einer Schraube 48, die durch eine Bohrung 50 hindurch gesteckt ist, mit dem bewegbaren Düsenteil 10 gekoppelt, in welchem eine Gewindebohrung zur Aufnahme der Schraube 48 ausgebildet ist. Durch die Kopplung des Verdrängungskörpers 42 mit dem beweglichen Düsenteil 10 wird immer dann, wenn das Düsenteil 10 bewegt wird, der Verdrängungskörper 42 innerhalb des Ausgleichskanals 32 bewegt, so dass sich dessen Volumen zur Aufnahme des Fluids verändert.

In dem Verteilerkanal 38 ist ein Verschlusskörper 54 in Form eines Kolbens 56 ausgebildet, dessen Endabschnitt ebenfalls ein Dichtelement in Form eines O-Rings 58 angeordnet ist, so dass der Kolben 56 abgedichtet innerhalb des Quer-Verteilerkanals 38 angeordnet ist. Durch die bewegliche und gleichzeitig abgedichtete Anordnung ist die mit Fluid befüllbare wirksame Länge des Verteilerkanals 38 veränderbar. Damit ist gleichzeitig die effektive Länge des Schlitzes 20 veränderbar. Wie gesagt, sind unterschiedlichen Längen bereits in den Figuren 6a bis c dargestellt.

Wie insbesondere Figur 5 gut veranschaulicht, ist ein Abschnitt, insbesondere ein Endabschnitt 60 (siehe Figur 5 links) des Kolbens 56 mit dem bewegbaren Düsenteil 10 gekoppelt. Hierzu ist eine Schraube 62 mit ihrem Außengewinde durch eine Durchgangsbohrung 64 in dem Kolben 56 hindurch gesteckt und in ein Innengewinde, welches in dem Düsenteil 10 ausgebildet ist, eingeschraubt. Dadurch ergibt sich, dass immer bei Bewegung des beweglichen Düsenteils 10 die wirksame mit Fluid befüllbare Länge des Verteilerkanals 38 verändert wird.

Gleichzeitig wird immer bei einer Bewegung des beweglichen Düsenteils 10 zur Variation der Länge des Schlitzes 20 einerseits die wirksame Länge und das Volumen des Verteilerkanals 38 verändert und die wirksame mit Fluid befüllbare Länge und das Volumen des Ausgleichskanals 32 verändert. Aufgrund der Dimensionierung des Verteilerkanals 38 und des Ausgleichskanals 32 und der Dimensionierung des Schlitzes 20 wird erreicht, dass bei Veränderung der Länge des Verteilerkanals 38 durch Bewegung des bewegbaren Düsenteils 10 das gesamte Volumen des Verteilerkanals 38, des Schlitzes 20 und des Ausgleichskanals 32 im Wesentlichen konstant bleibt. Hieraus folgt, dass bei einer Verschiebung des Düsenteils 10 weder Fluid aus der Austrittsöffnung 22 herausgedrückt wird noch Luft in den Schlitz 20 eindringt, je nachdem ob die wirksame Länge des Verteilerkanals 38 und damit die Länge des Schlitzes 20 vergrößert oder verkleinert wird.

In nicht dargestellter Weise kann die Form des Ausgleichskanals 32 und/oder die Form des Verteilerkanals 38 auch nicht halbkreisförmig sein, beispielsweise mehreckig wie rechteckig, quadratisch, polygonal, elliptisch, kreisförmig oder dergleichen. Je nach Form würde die Form des Verdrängungskörpers 42 bzw. des Kolbens 44 und die Form des Verschlusskörpers 54 und des Kolbens 56 angepasst sein.

Man erkennt deutlich, dass die der Ausgleichskanal 32 und Verteilerkanal 38 im Ausführungsbeispiel im Wesentlichen parallel zueinander angeordnet sind. Es ist prinzipiell alternativ auch denkbar, dass eine nicht parallele Anordnung besteht.

Im Betrieb wird das Fluid wie folgt die Vorrichtung 1 durchströmen. Durch einen Zuführkanal 8 wird Fluid in die Düsenanordnung 4 eingeleitet und strömt in den Ausgleichskanal 32 ein. Aus dem Ausgleichskanal 32 durchströmt das Fluid den Verbindungskanal 40 (Figur 6). Das Fluid gelangt aus dem Verbindungskanal 40 in den Quer-Verteilerkanal 38 und strömt von diesem durch den Schlitz 20 und wird durch die Austrittsöffnung 22 von der Vorrichtung 1 abgegeben und auf ein Substrat aufgetragen.

Wie insbesondere Figur 6 veranschaulicht, ist die durchströmte und wirksame Länge sowohl des Ausgleichskanals 32, als auch des Quer-Verteilerkanals 38 veränderbar. Die wirksame Länge wird bestimmt durch die jeweilige Stellung des Verschlusskörpers 54 in dem Verteilerkanal 38 bzw. durch die Stellung des Verdrängungskörpers 42 in dem Ausgleichkanal 32. In Figur 6a ist die Länge des Ausgleichskanals 32 relativ klein und die Länge des Verteilerkanals 38 und die Länge des Schlitzes 20 groß. In Figur 6b sind mittlere Längen des Ausgleichskanals 32 und des Verteilerkanals 38 dargestellt. In Figur 6c ist die Länge des Ausgleichskanals 32 relativ groß und die Länge des Verteilerkanals 38 und die Länge des Schlitzes 20 relativ klein. Dies ergibt sich durch die jeweilige Position des beweglichen Düsenteils 10.

Wie die Figuren 1 und 3 zeigen, weist die Düsenanordnung 4 eine Abrisskante 70 auf, die durch eine Vertiefung 72 an dem beweglichen Düsenteil 10 gebildet ist. An der Abrisskante 70 kommt das mit Fluid beschichtete Substrat, welches sich in Figur 3 von links nach rechts bewegt, außer Kontakt von der Oberfläche der Düsenanordnung, insbesondere des Düsenteils 10. Das Fluid löst sich dadurch gut ab und verbleibt an dem Substrat.

Anstelle der mechanischen Kopplung des Kolben 44, 56 zur gleichzeitigen Veränderung des Volumens des Ausgleichskanals 32 einerseits und des Volumens des Verteilerkanals 38 nebst Schlitz 20 andererseits können auch andere als mechanische Kopplungsmittel vorgesehen sein. So können beispielsweise motorisch angetriebene Antriebseinrichtungen vorgesehen sein, um die Kolben 44 bzw. 56 mithilfe einer Steuerungseinrichtung so zu steuern, dass die Summe der Volumina des Verteilerkanals 38 nebst Schlitz 20 und des Ausgleichskanals 32 im Wesentlichen konstant bleiben, wenn die Länge des Schlitzes 20 variiert wird.

Auch allen nachfolgenden Ausführungsbeispielen ist gemeinsam, dass eine Volumenkompensation vorhanden ist. Dies bedeutet, dass bei Veränderung der wirksamen Länge der Austrittsöffnung 22 eines längenveränderbaren Schlitzes 20 mittels eines Ausgleichsvolumens oder eines Ausgleichskanals 32 das gesamte Volumen des Schlitzes 20, eines mit diesem kommunizierenden Quer-Verteilerkanals 38 und eines mit dem Verteilerkanal 38 und/oder dem Schlitz 20 kommunizierenden Ausgleichskanals 32 im Falle einer Variation der Länge im Wesentlichen konstant gehalten werden kann. In jedem Fall weisen alle Ausführungsbeispiele ein Ausgleichsvolumen oder einen Ausgleichskanal 32 auf, dessen mit Fluid befüllbares Volumen veränderbar ist und der mit dem Verteilerkanal 38 kommuniziert.

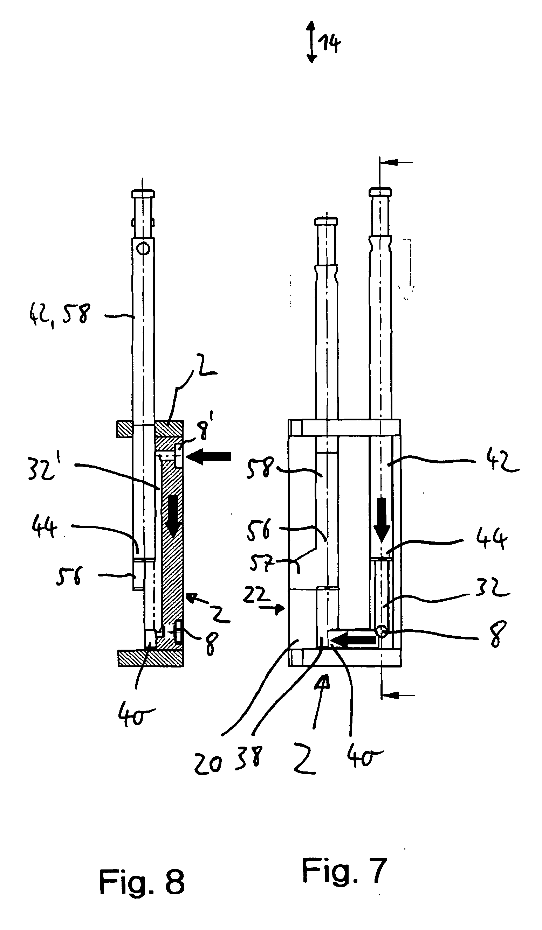

Das in den Figuren 7 und 8 gezeigte alternative Ausführungsbeispiel einer Vorrichtung 1 zum Abgeben von Fluid weist ähnliche Bauteile und Funktionalitäten wie das zuvor beschriebene Ausführungsbeispiel auf; insofern sind gleiche Bezugszeichen verwendet worden und wird auf die obigen Beschreibungen vollumfänglich Bezug genommen. Nachfolgend werden im Wesentlichen Unterschiede der alternativen Ausführungsbeispiele beschrieben.

In einem Grundkörper 2 ist ein Zuführkanal 8 ausgebildet, der mit einer Fluidquelle kommuniziert. Der Fluid-Zuführkanal 8 kommuniziert einerseits mit einem Ausgleichskanal 32 und andererseits mit einem in dem Grundkörper ausgebildeten Verbindungskanal 40, welcher mit einem Quer-Verteilerkanal 38 in Fluidverbindung steht. Der Verteilerkanal 38 kommuniziert mit einem Schlitz 20, welcher eine schlitzförmige Austrittsöffnung 22 aufweist, durch welche Fluid abgegeben werden kann.

Die wirksame mit Fluid befüllbare Länge des Verteilerkanals 38 und des Schlitzes 20 lässt sich dadurch variieren, dass ein in Richtung seiner Längsachse beweglicher und abgedichteter Kolben 58, der einen Verschlusskörper 56 bildet und bewegbar angeordnet ist. Am Ende des Kolbens 58 ist eine Fahne 57 angeformt, die den Schlitz 20 seitlich begrenzt. Der Kolben 58 lässt sich hin- und herbewegen um die Länge des Schlitzes 20 zu variieren.

Das Volumen des Ausgleichskanals 32 lässt sich ebenfalls verändern. Hierzu ist in dem Verteilerkanal 32 ein Verdrängungskörper 42 in Form eines Kolbens 44 abgedichtet und bewegbar angeordnet. Hierzu kann der Kolben 44 in Richtung des Pfeils 14 und somit seiner Längsachse hin- und herbewegt werden.

Alternativ kann die in Figur 7 und 8 gezeigte Vorrichtung so gestaltet sein, dass ein Fluidzuführkanal 8 in dem Grundkörper 2 ausgebildet ist, welcher einen Ringraum 32' durchströmt, der einen Ausgleichskanal bildet und dessen Volumen veränderbar ist. Zur Veränderung des Volumens ist ein Verdrängungskörper 42 in Form eines Kolbens 44 innerhalb des Ausgleichskanals 32' bewegbar angeordnet, um dessen Volumen ändern zu können. Der ringförmige Ausgleichskanal 32' kommuniziert mit einem Verbindungskanal 40, der wiederum mit einem Verteilerkanal 38 wie zuvor beschrieben in Fluidverbindung steht.

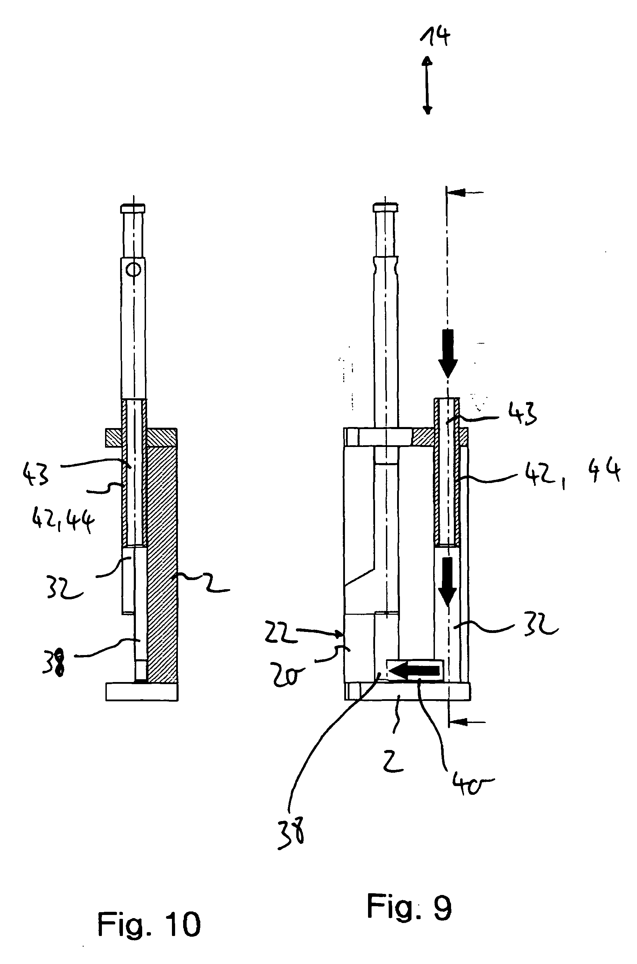

Bei dem in Figuren 9 und 10 gezeigten alternativen Ausführungsbeispiel besteht ein Unterschied zu dem zuvor beschriebenen Ausführungsbeispiel im Wesentlichen darin, dass in einen in einem Grundkörper 2 ausgebildeten Ausgleichskanal 32 ein als Rohr ausgebildeter Verdrängungskörper 42 bzw. Kolben 44 längsverschieblich bewegbar angeordnet ist in Richtung des Doppelpfeils 14, so dass das Volumen des Ausgleichskanals 32 variiert werden kann. Die Zuführung des Fluids von der Fluidquelle erfolgt durch den inneren Hohlraum 43 des rohrförmigen Kolbens 4, dessen oberes Ende beispielsweise mit einem Schlauch verbunden sein kann. Das Fluid kann den Ausgleichskanal 32 weiter in Figur 9 nach unten durchströmen und einen Verbindungskanal 40 durchströmen, um anschließend in den Quer-Verteilerkanal 38 einströmen zu können, welcher mit dem Schlitz 20 kommuniziert. Der Verteilerkanal 38 ist wiederum, wie zuvor insbesondere anhand des Ausführungsbeispiels gemäß Figur 7 beschrieben, in seiner wirksamen Länge veränderbar, um die Länge des Schlitzes 20 variieren zu können.

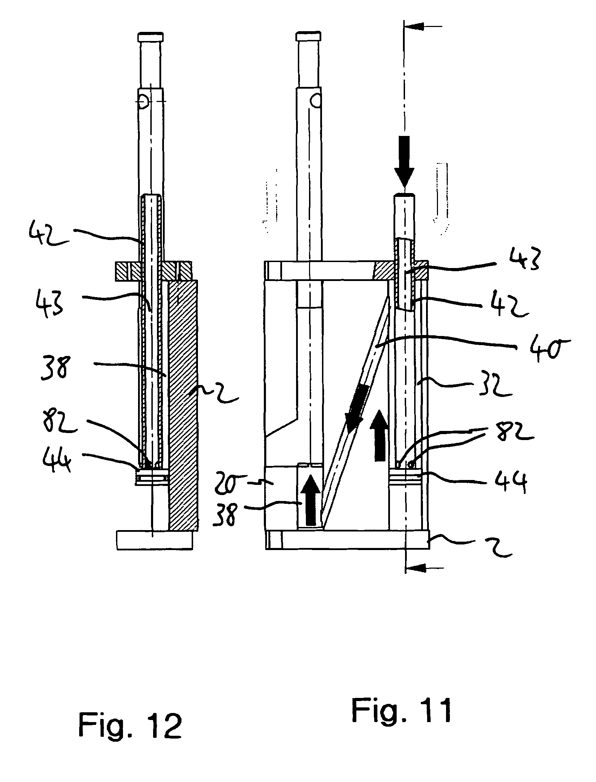

Auch hinsichtlich des in den Figuren 11 und 12 gezeigten alternativen Ausführungsbeispiels wird vollumfänglich auf die obigen Beschreibungen Bezug genommen. Die Vorrichtung 1 zum Abgeben von Fluid weist ebenfalls einen Grundkörper 2 auf. Durch einen Ausgleichskanal 32, der als Ringkanal in dem Grundkörper 2 ausgebildet ist, kann Fluid von einem Zuführkanal eingeleitet werden. Wieder ist ein rohrförmiger Verdrängungskörper innerhalb des Ausgleichskanals 32 bewegbar angeordnet. An dem unteren Ende des rohrförmigen Verdrängungskörpers 42 ist ein abgedichteter Kolben 44 vorgesehen, der den inneren Hohlraum 43 des Rohres verschließt. Ferner sind mehrere über den Umfang verteilte Durchtrittskanäle 82 in dem rohrförmigen Verdrängungskörper 42 ausgebildet durch welche Fluid aus dem Innenraum 43 in den Ausgleichskanal 32 einströmen kann. Das Fluid kann ferner durch einen im oberen Abschnitt mit dem Ausgleichskanal 32 kommunizierenden Verbindungskanal 40 aus dem Ausgleichskanal 32 in den Quer-Verteilerkanal 38 strömen und von dort auf die zuvor beschriebene Weise in den Schlitz 20.

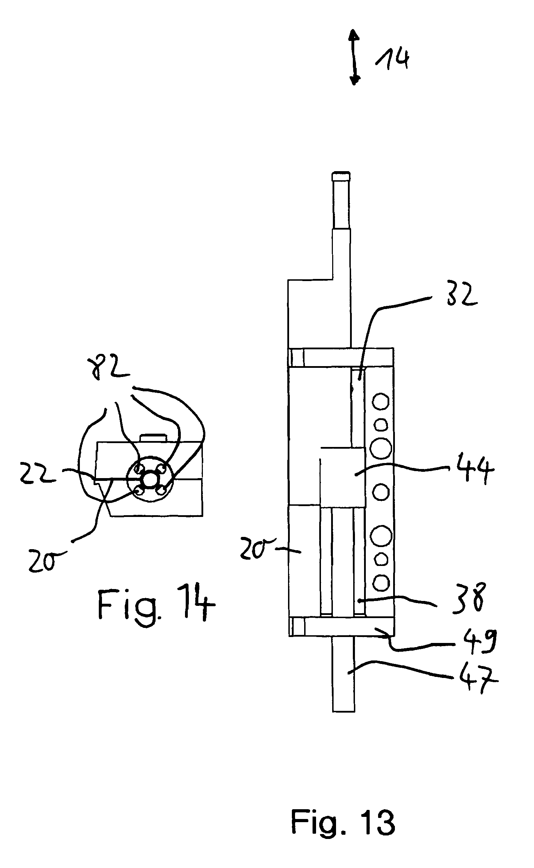

Bei dem in den Figuren 13 und 14 gezeigten Ausführungsbeispiel wird Fluid durch einen ringförmigen Ausgleichskanal 32 aus einem Zuführkanal der Vorrichtung 1 zugeführt. Ein im Wesentlichen zylindrischer Kolben 44 ist abgedichtet und beweglich innerhalb des Ausgleichskanals 32 in Richtung des Doppelpfeils 14 bewegbar. In dem Kolben 44 sind vorzugsweise mehrere Durchtrittskanäle 82 ausgebildet, durch die Fluid aus dem Ausgleichskanal 32 in einen Verteilerkanal 38 strömen kann, welcher ebenfalls als Ringkanal ausgebildet ist und mit einem Schlitz 20 mit einer Austrittsöffnung 22 kommuniziert. Eine Kolbenstange 47 ist abgedichtet durch einen Abschnitt 49 des Grundkörpers durchgeführt und dient zur Lagerung des Kolbens 44.

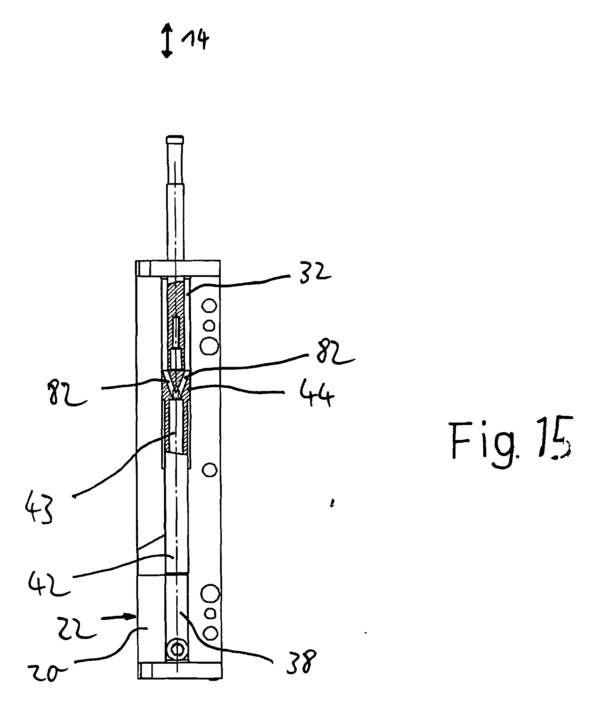

Schließlich zeigt Figur 15 ein weiteres alternatives Ausführungsbeispiel. Hier strömt Fluid von oben in einen ringförmigen Ausgleichskanal 32 ein. Ein im Wesentlichen zylindrischer Kolben 44 ist abgedichtet innerhalb des Ausgleichskanals 32 beweglich in Richtung des Doppelpfeils 14 angeordnet. In dem Kolben sind mehrere schräg in Bezug auf die Längsachse des Kolbens verlaufende Durchtrittskanäle 82 ausgebildet, durch welche Fluid von dem Austrittskanal 32 in einen inneren Hohlraum 43 einströmen kann. Dieser ist in einem rohrförmigen Abschnitt ausgebildet. Der Hohlraum 43 mündet in einen Quer-Verteilerkanal 38, der durch den rohrförmigen Abschnitt des Verschlusskörpers 42 begrenzt wird und in den Schlitz 20 mit Austrittsöffnung 22 mündet.

## Patentansprüche

1. Vorrichtung zum Abgeben von Fluid auf ein Substrat, mit
einem Grundkörper (2),
einem mit einer Fluidquelle verbindbaren Fluidzuführkanal (8) zum Zuführen des Fluids, und
einer Düsenanordnung (4), welche einen mit dem Fluidzuführkanal (8) kommunizierenden Verteilerkanal (38) aufweist und welche einen mit dem Verteilerkanal (38) kommunizierenden im Wesentlichen länglichen Schlitz (20) mit mindestens einer Austrittsöffnung (22) zum Abgeben des Fluids aufweist, wobei die mit Fluid füllbare wirksame Länge des Verteilerkanals (38) mittels eines in dem Verteilerkanal (38) bewegbaren Verschlusskörpers (54) variierbar ist, **dadurch gekennzeichnet, dass**
ein Ausgleichskanal (32) mit dem Verteilerkanal (38) in Fluidverbindung steht, dessen Volumen zur Aufnahme von Fluid veränderbar ist, wobei
das Volumen des Ausgleichskanals (32) in Abhängigkeit von der Größe des jeweils wirksamen mit Fluid befüllten Volumens des Verteilerkanals (38) veränderbar ist derart, dass bei einer Verstellung der wirksamen Länge des Verteilerkanals (38) das gesamte mit Fluid gefüllte Volumen des Verteilerkanals (38), des Ausgleichkanals (32) und des Schlitzes (20) im Wesentlichen konstant bleibt.

2. Vorrichtung nach Anspruch 1,
**dadurch gekennzeichnet, dass** das Volumen des Ausgleichskanals (32) dadurch veränderbar ist, das ein Verdrängungskörper (42) bewegbar innerhalb des Ausgleichskanals (32) angeordnet ist.

3. Vorrichtung nach Anspruch 2,
**dadurch gekennzeichnet, dass** der Verdrängungskörper (42) ein Kolben (44) ist. der abgedichtet und bewegbar innerhalb des Ausgleichskanals (32) angeordnet ist.

4. Vorrichtung nach Anspruch 3,
**dadurch gekennzeichnet, dass** der Ausgleichskanal (32) eine im Wesentlichen zylindrische, teilzylindrische oder im Wesentlichen mehreckige Form hat und durch einen im Wesentlichen zylindrischen, teilzylindrischen oder mehreckigen Kolben (44) abgedichtet wird.

5. Vorrichtung nach mindestens einem der vorstehenden Ansprüche,
**dadurch gekennzeichnet, dass** der in dem Verteilerkanal (38) bewegbare verschlusskörper ein Kolben (56) ist, der den Verteilerkanal (38) seitlich abdichtet und dadurch die wirksame Länge des Verteilerkanals (38) begrenzt.

6. Vorrichtung nach mindestens einem der vorstehenden Ansprüche,
**dadurch gekennzeichnet, dass** der Verteilerkanal (38) und der Ausgleichskanal (32) im Wesentlichen parallel zueinander angeordnet sind

7. Vorrichtung nach mindestens einem der vorstehenden Ansprüche. **dadurch gekennzeichnet, dass** der Verteilerkanal (38) und der Ausgleichskanal (32) mittels eines Verbindungskanals (40) miteinander in Fluidverbindung stehen.

8. Vorrichtung nach Anspruch 7.
**dadurch gekennzeichnet, dass** der Ausgleichskanal (32) so in Bezug zu dem Zuführkanal (8) und dem Verteilerkanal (38) angeordnet ist, dass das Fluid im Betrieb von dem Zuführkanal (8) in den Ausgleichskanal (32) strömt, den Ausgleichskanal (32) durchströmt, dann den Verbindungskanal (40) zwischen Ausgleichskanal (32) und Verteilerkanal (38) durchströmt und dann den Verteilerkanal (38) und den Schlitz (20) durchströmt.

9. Vorrichtung nach mindestens einem der vorstehenden Ansprüche,
**dadurch gekennzeichnet, dass** die Vorrichtung zwei relativ zueinander in Längsrichtung des Schlitzes bewegbare Düsenteile (6, 10) aufweist, dass der Schlitz (20) durch die zwei Düsenteile begrenzt wird und die wirksame Länge des Schlitzes durch Verschiebung der beiden Düsenteite (6, 10) relativ zueinander verändert wird.

10. Vorrichtung nach Anspruch 9,
**dadurch gekennzeichnet, dass** der Verteilerkanal (38) und/oder Ausgleichskanal (32) und/oder Verbindungskanal (40) im Wesentlichen als Vertiefung in einem der beiden Düsenteile (6, 10) oder durch Vertiefungen (24, 26) in beiden Düsenteile (6. 20) ausgebildet ist.

11. Vorrichtung nach mindestens einem der vorstehenden Ansprüche,
**dadurch gekennzeichnet, dass** ein Kolben (56) zur Begrenzung des Verteilerkanals (38) und/oder ein Kolben (44) zur Veränderung des Volumens des Ausgleichskanals (38) mechanisch mit dem bewegbaren Düsenteil (10) gekoppelt ist, insbesondere mittels einer Kopplungsstange.

12. Vorrichtung nach mindestens einem der Ansprüche 9 bis 11,
**dadurch gekennzeichnet, dass** eines der beiden Düsenteile (6, 10) mittels einer Antriebseinrichtung, insbesondere einer Gewindespindel verschiebbar ist.

13. Vorrichtung nach mindestens einem der Ansprüche 5 bis 12,
**dadurch gekennzeichnet, dass** der Kolben (44) zur Verstellung des Volumens des Ausgleichskanals (32) und/oder der Kolben (56) zur Verstellung der Länge des Verteilerkanals (38) mittels eines Motors, insbesondere eines Elektromotors verfahrbar ist.

14. Vorrichtung nach einem der vorstehenden Ansprüche 3 bis 13,
**dadurch gekennzeichnet, dass** der Kolben (44) zur Veränderung des Volumens des Ausgleichskanals (32) mindestens eine Durchgangsbohrung (43) aufweist,
durch weiche das Fluid hindurchströmen kann.

15. Vorrichtung nach einem der Ansprüche 3 bis 14,
**dadurch gekennzeichnet, dass** der Kolben (44) mehrere Durchtrittskanäle (82) aufweist, durch welche Fluid von dem Ausgleichskanal (32) in den Verteilerkanal (38) strömen kann.

16. Vorrichtung nach mindestens einem der Ansprüche 3 bis 15,
**dadurch gekennzeichnet, dass** der Kolben (44) einen ersten als Rohr ausgebildeten Abschnitt aufweist, durch welchen Fluid aus dem Fluidzuführkanal (8) hindurchströmen kann, und einen abgedichtet in dem Ausgleichskanal (32) angeordneten Dichtabschnitt aufweist, der das Rohr an einem Ende begrenzt, dass das Rohr mehrere Durchtrittsbohrungen aufweist, durch welche Fluid aus dem Rohr in den Ausgleichskanal und von dort durch den Verbindungskanal in den Verteilerkanal einströmen kann.

## Claims

1. A device for dispensing fluid onto a substrate, with
a basic body (2),
a fluid supply duct (8), which can be connected to a fluid source, for supplying the fluid, and
a nozzle arrangement (4), which has a distributor duct (38) which communicates with the fluid supply duct (8), and which has a substantially elongate slot (20) with at least one exit opening (22) for dispensing the fluid, which slot communicates with the distributor duct (3 8),
the effective length of the distributor duct (38) which can be filled with fluid being variable by means of a closure body (54) which is movable in the distributor duct (38), **characterised in that** a compensation duct (32) is in fluid connection with the distributor duct (38), the volume of which for receiving fluid is changeable,
the volume of the compensation duct (32) being changeable dependent on the size of the effective fluid-filled volume in each case of the distributor duct (38), such that upon adjustment of the effective length of the distributor duct (38) the entire fluid-felled volume of the distributor duct (38), the compensation duct (32) and the slot (20) remains substantially constant.

2. A device according to Claim 1, **characterised in that** the volume of the compensation duct (32) is changeable by a displacement body (42) being arranged movably within the compensation duct (32).

3. A device according to Claim 2, **characterised in that** the displacement body (42) is a piston (44) which is arranged in sealed and movable manner within the compensation duct (32).

4. A device according to Claim 3, **characterised in that** the compensation duct (32) has a substantially cylindrical, partially cylindrical or substantially polygonal form and is sealed by a substantially cylindrical, partially cylindrical or polygonal piston (44).

5. A device according to at least one of the above claims, **characterised in that** the closure body which is movable within the distributor duct (38) is a piston (56) which laterally seals the distributor duct (38) and thereby limits the effective length of the distributor duct (38).

6. A device according to at least one of the above claims, **characterised in that** the distributor duct (38) and the compensation duct (32) are arranged substantially parallel to one another.

7. A device according to at least one of the above claims, **characterised in that** the distributor duct (38) and the compensation duct (32) are in fluid connection with each other by means of a connecting duct (40).

8. A device according to Claim 7, **characterised in that** the compensation duct (32) is arranged relative to the supply duct (8) and the distributor duct (38) such that the fluid during operation flows from the supply duct (8) into the compensation duct (32), flows through the compensation duct (32), then flows through the connecting duct (40) between the compensation duct (32) and distributor duct (38), and then flows through the distributor duct (38) and the slot (20).

9. A device according to at least one of the above claims, **characterised in that** the device has two nozzle parts (6, 10) which are movable relative to each other in the longitudinal direction of the slot, **in that** the slot (20) is limited by the two nozzle parts and the effective length of the slot is changed by displacing the two nozzle parts (6, 10) relative to one another.

10. A device according to Claim 9, **characterised in that** the distributor duct (38) and/or compensation duct (32) and/or connecting duct (40) is formed substantially as a recess in one of the two nozzle parts (6, 10) or is formed by recesses (24, 26) in both nozzle parts (6, 20).

11. A device according to at least one of the above claims, **characterised in that** a piston (56) for limiting the distributor duct (38) and/or a piston (44) for changing the volume of the compensation duct (38) is coupled mechanically with the movable nozzle part (10), in particular by means of a coupling rod.

12. A device according to at least one of Claims 9 to 11, **characterised in that** one of the two nozzle parts (6, 10) is displaceable by means of a drive means, in particular a threaded spindle.

13. A device according to at least one of Claims 5 to 12, **characterised in that** the piston (44) for adjusting the volume of the compensation duct (32) and/or the piston (56) for adjusting the length of the distributor duct (38) can be displaced by means of a motor, in particular an electric motor.

14. A device according to one of the preceding claims 3 to 13, **characterised in that** the piston (44) has at least one through-bore (43), through which the fluid can flow, for changing the volume of the compensation duct (32).

15. A device according to one or Claims 3 to 14, **characterised in that** the piston (44) has a plurality of passage ducts (82) through which fluid can flow from the compensation duct (32) into the distributor duct (38).

16. A device according to at least one of Claims 3 to 15, **characterised in that** the piston (44) has a first section formed as a tube, through which fluid from the fluid supply duct (8) can flow, and a sealing section arranged sealed in the compensation duct (32), which section limits the tube at one end, **in that** the tube has a plurality of through-bores through which fluid can flow out of the tube into the compensation duct and thence through the connecting duct into the distributor duct.

## Revendications

1. Dispositif d'application d'un fluide sur un substrat, comprenant
un corps de base (2),
un canal d'amenée de fluide (8) pouvant être relié à une source de fluide et servant à l'amenée du fluide, et
un système de buse (4) qui comporte un canal de distribution (38) communiquant avec le canal d'amenée de matière liquide (8) et qui comporte une fente (20) essentiellement longitudinale communiquant avec le canal de distribution (38) et ayant au moins une ouverture de sortie (22) pour l'application du fluide,
dans lequel la longueur effective du canal de distribution (38) pouvant être remplie de fluide peut être variée au moyen d'un corps d'obturation (54) mobile dans le canal de distribution (38),
**caractérisé en ce que**
un canal de compensation (32) est en liaison fluidique avec le canal de distribution (38) dont le volume peut être modifié pour la réception de fluide,
dans lequel le volume du canal de compensation (32) peut être modifié en fonction de la taille du volume effectif rempli de fluide du canal de distribution (38) de manière telle que, en cas de changement de la longueur effective du canal de distribution (38), l'ensemble du volume rempli de fluide du canal de distribution (38), du canal de compensation (32) et de la fente (20) reste essentiellement constant.

2. Dispositif selon la revendication 1,
**caractérisé en ce que** le volume du canal de compensation (32) peut être modifié du fait qu'un corps de refoulement (42) est disposé de façon mobile à l'intérieur du canal de compensation (32).

3. Dispositif selon la revendication 2,
**caractérisé en ce que** le corps de refoulement (42) est un piston (44) qui est disposé de manière étanchéifiée et mobile à l'intérieur du canal de compensation (32).

4. Dispositif selon la revendication 3,
**caractérisé en ce que** le canal de compensation (32) a une forme essentiellement cylindrique, en partie cylindrique ou essentiellement polyédrique et est étanchéifié par un piston (44) essentiellement cylindrique, en partie cylindrique ou essentiellement polyédrique.

5. Dispositif selon au moins une des revendications précédentes,
**caractérisé en ce que** le corps d'obturation mobile dans le canal de distribution (38) est un piston (56) qui étanchéifie latéralement le canal de distribution (38) et limite par conséquent la longueur effective du canal de distribution (38).

6. Dispositif selon au moins une des revendications précédentes, **caractérisé en ce que** le canal de distribution (38) et le canal de compensation (32) sont disposés de façon essentiellement parallèle l'un par rapport à l'autre.

7. Dispositif selon au moins une des revendications précédentes, **caractérisé en ce que** le canal de distribution (38) et le canal de compensation (32) sont en liaison fluidique entre eux par le biais d'un canal de liaison (40).

8. Dispositif selon la revendication 7,
**caractérisé en ce que** le canal de compensation (32) est disposé par rapport au canal d'amenée (8) et au canal de distribution (38) de manière telle que le fluide s'écoule en fonctionnement du canal d'amenée (8) dans le canal de compensation (32), traverse le canal de compensation (32), traverse ensuite le canal de liaison (40) entre le canal de compensation (32) et le canal de distribution (38) et traverse ensuite le canal de distribution (38) et la fente (20).

9. Dispositif selon au moins une des revendications précédentes,
**caractérisé en ce que** le dispositif comporte deux parties de buse (6, 10) mobiles l'une par rapport à l'autre dans la direction longitudinale de la fente, **en ce que** la fente (20) est limitée par les deux parties de buse et la longueur effective de la fente est modifiée par le déplacement des deux parties de buse (6, 10) l'une par rapport à l'autre.

10. Dispositif selon la revendication 9,
**caractérisé en ce que** le canal de distribution (38) et/ou le canal de compensation (32) et/ou le canal de liaison (40) est/sont formé(s) essentiellement en tant qu'évidement dans une des deux parties de buse (6, 10) ou par des évidements (24, 26) dans les deux parties de buse (6, 20).

11. Dispositif selon au moins une des revendications précédentes, **caractérisé en ce qu'**un piston (56) pour limiter le canal de distribution (38) ou/et un piston (44) pour modifier le volume du canal de compensation (38) est/sont couplé(s) mécaniquement à la partie de buse mobile (10), en particulier au moyen d'une tige de couplage.

12. Dispositif selon au moins une des revendications 9 à 11,
**caractérisé en ce qu'**une des deux parties de buse (6, 10) peut être déplacée au moyen d'un système d'entraînement, en particulier d'une broche filetée.

13. Dispositif selon au moins une des revendications 5 à 12,
**caractérisé en ce qu'**un moteur, en particulier un moteur électrique, peut servir à déplacer le piston (44) pour le changement du volume du canal de compensation (32) et/ou le piston (56) pour le changement de la longueur du canal de distribution (38).

14. Dispositif selon au moins une des revendications 3 à 13, **caractérisé en ce que** le piston (44) comporte, pour la modification du volume du canal de compensation (32), au moins un forage de passage (43) au travers duquel peut s'écouler le fluide.

15. Dispositif selon une des revendications 3 à 14,
**caractérisé en ce que** le piston (44) comporte plusieurs canaux de passage (82) par lesquels le fluide peut s'écouler du canal de compensation (32) dans le canal de distribution (38).

16. Dispositif selon au moins une des revendications 3 à 15,
**caractérisé en ce que** le piston (44) comporte une première section en forme de tube par laquelle peut s'écouler le fluide provenant du canal d'amenée de fluide (8) et une section d'étanchéité qui est disposée de manière étanchéifiée dans le canal de compensation (32) et délimite le tube à une extrémité, **en ce que** le tube comporte plusieurs forages de passage par lesquels le fluide peut s'écouler depuis le tube dans le canal de compensation et de là, par le biais du canal de liaison, dans le canal de distribution.
